# EUROPEAN PATENT APPLICATION

(11) **EP 4 492 288 A1**
(43) Date of publication of application: **15.01.2025**
(21) Application number: 24188270.3
(22) Date of filing: 12.07.2024
(51) Int. Cl.: G06N 3/063, G06F 8/41

(54) **INSTRUCTION GENERATING METHOD, APPARATUS AND ELECTRONIC DEVICE**

(30) Priority: 12.07.2023 CN 202310855003
(71) Applicant: Beijing Horizon Information Technology Co., Ltd., Beijing 100094 (CN)
(72) Inventor: ZHANG, Yinan, Beijing, 100094 (CN)
(74) Representative: Dehns Germany Partnerschaft mbB

(57) **Abstract**

Disclosed are an instruction generating method, an apparatus and an electronic device. The present disclosure relates to the technical field of integrated circuits. The method comprises determining parameter information about input feature data to be processed by a function operator in a neural network model; determining hardware parameters supported by the neural network processor; determining target splicing information corresponding to the parameter information about the input feature data based on the hardware parameters and the parameter information about the input feature data, wherein the target splicing information comprises the number of spliced channels and the number of spliced data sets; and generating instructions executable by the neural network processor based on the target splicing information. The technical solution of the present disclosure may avoid the problem of waste of computational resources due to the fact that the number of channels supported by the neural network processor for parallel processing is much greater than the number of channels of input feature data, thereby fully utilizing the computational resources of the neural network processor.

## Description

### FIELD OF THE PRESENT DISCLOSURE

The present disclosure relates to the field of integrated circuit technology, and in particular to an instruction generating method, an apparatus and an electronic device.

### BACKGROUND OF THE PRESENT DISCLOSURE

In performing a deformation (e.g., Warp) operation on the input feature data, the neural network processor is capable of performing parallel processing on the input feature data in the channel direction, i.e., processing data for multiple channels in the input feature data simultaneously, thereby improving computational efficiency.

### SUMMARY OF THE PRESENT DISCLOSURE

Generally, neural network processors perform parallel processing on input feature data. When the number of channels supported by the neural network processor for parallel processing (e.g., 64 channels supported for parallel processing) is greater than the number of channels of the input feature data (e.g., 16 channels of the input feature data), then the entire computational resources of the neural network processor will not be used in one operation, which results in a waste of computational resources of the neural network processor.

In order to solve the above technical problem, the present disclosure has been proposed. Embodiments of the present disclosure provide an instruction generating method, apparatus, and electronic device that, when generating instructions executable by a neural network processor, may make full use of the computing resources of the neural network processor, improve the utilization rate of the computing resources, and avoid the problem of waste of computing resources due to the fact that the number of channels supported by the neural network processor for parallel processing is much greater than the number of channels for inputting feature data.

In one aspect of the present disclosure, an instruction generating method for a neural network processor is provided, the method including: determining parameter information about input feature data to be processed by a function operator in a neural network model; determining hardware parameters supported by the neural network processor; determining target splicing information corresponding to the parameter information about the input feature data based on the hardware parameters and the parameter information about the input feature data, wherein the target splicing information includes the number of spliced channels and the number of spliced data sets; and generating instructions executable by the neural network processor based on the target splicing information.

Based on this scheme, through the parameter information about the input feature data and the hardware parameters supported by the neural network processor, the target splicing information corresponding to the parameter information about the input feature data is obtained. Finally, the instruction executable by the neural network processor is generated by using the target splicing information. By executing the executable instruction, the neural network processor may make full use of the computational resources of the neural network processor and improve the utilization of the computational resources.

In a second aspect of the present disclosure, a method for processing feature data by a neural network processor is provided, the method including: firstly determining a sequence of executable instructions for processing of at least two sets of input feature data; and processing the at least two sets of input feature data based on the sequence of the executable instructions to obtain output feature data corresponding to the input feature data.

In a third aspect of the present disclosure, an instruction generating apparatus for a neural network processor is provided, the apparatus including: a first determining module configured to determine parameter information about input feature data to be processed by a function operator in a neural network model; a second determining module configured to determine hardware parameters supported by the neural network processor; a third determining module configured to determine target splicing information corresponding to the parameter information about the input feature data based on the hardware parameters and the parameter information about the input feature data, wherein the target splicing information includes the number of spliced channels and the number of spliced data sets; and an instruction generating module configured to generate instructions executable by the neural network processor based on the target splicing information.

In a fourth aspect of the present disclosure, an apparatus for processing feature data by a neural network processor is provided, the apparatus including: a determining module configured to determine a sequence of executable instructions for processing of at least two sets of input feature data; and a processing module configured to process the at least two sets of input feature data based on the sequence of the executable instructions to obtain output feature data corresponding to the input feature data.

In a fifth aspect of the present disclosure, a computer-readable storage medium is provided for storing a computer program for performing the method based on the above-mentioned first and second aspects.

In a sixth aspect of the present disclosure, an electronic device is provided, the device including: a processor; a memory for storing processor-executable instructions; wherein the processor is configured to read the executable instructions from a memory and executing the instructions to implement the method based on the above-mentioned first and second aspects.

In a seventh aspect of the present disclosure, a computer program product is provided, when the instructions thereon are executed by a processor to cause the processor to perform an instruction generating method for a neural network processor in the first aspect of the present disclosure and a method for processing feature data by the neural network processor as provided in the second aspect of the present disclosure.

### BRIEF DESCRIPTION OF THE DRAWINGS

FIG. 1 is a schematic structural diagram of a compile-side device according to an exemplary embodiment of the present disclosure.
FIG. 2 is a schematic structural diagram of an execution side device according to an exemplary embodiment of the present disclosure.
FIG. 3 is one of the flow diagrams of an instruction generating method for a neural network processor according to an exemplary embodiment of the present disclosure.
FIG. 4 is one of warp operation diagrams according to an exemplary embodiment of the present disclosure.
FIG. 5 is a second flow diagram of an instruction generating method for a neural network processor according to an exemplary embodiment of the present disclosure.
FIG. 6 is a third flow diagram of an instruction generating method for a neural network processor according to an exemplary embodiment of the present disclosure.
FIG. 7 is a fourth flow diagram of an instruction generating method for a neural network processor according to an exemplary embodiment of the present disclosure.
FIG. 8 is a fifth flow diagram of an instruction generating method for a neural network processor according to an exemplary embodiment of the present disclosure.
FIG. 9 is a sixth flow diagram of an instruction generating method for a neural network processor according to an exemplary embodiment of the present disclosure.
FIG. 10 is a seventh flow diagram of an instruction generating method for a neural network processor according to an exemplary embodiment of the present disclosure.
FIG. 11 is one of the flow diagrams of a method for processing feature data by a neural network processor according to an exemplary embodiment of the present disclosure.
FIG. 12 is a second flow diagram of a method for processing feature data by a neural network processor according to an exemplary embodiment of the present disclosure.
FIG. 13 is a second warp operation diagram according to an exemplary embodiment of the present disclosure.
FIG. 14 is a third flow diagram of a method for processing feature data by a neural network processor according to an exemplary embodiment of the present disclosure.
FIG. 15 is a schematic structural diagram of an instruction generating apparatus for a neural network processor according to an exemplary embodiment of the present disclosure.
FIG. 16 is a schematic structural diagram of an apparatus for processing feature data by a neural network processor according to an exemplary embodiment of the present disclosure.
FIG. 17 is a schematic structural diagram of an electronic device according to an exemplary embodiment of the present disclosure.

### DESCRIPTION OF THE EMBODIMENTS

Hereinafter, exemplary embodiments according to the present disclosure will be described in detail with reference to the accompanying drawings. It is to be understood that the described embodiments are merely a few of the embodiments of the present disclosure and not all of the embodiments of the present disclosure, and that the present disclosure is not to be limited to the exemplary embodiments described herein.

### Application Overview

In an automatic driving scene, a driving vehicle needs to know the surrounding environment in all directions, so as to adjust the driving strategy in time according to the surrounding environment, thereby improving the driving safety. Generally, a driving vehicle may call a camera to capture a plurality of images, and then perform processing such as fusion, torsion, and splicing on the plurality of images to obtain an aerial view. This aerial view may be used to describe the surroundings of the driving vehicle. The driving strategy for driving the vehicle may then be adjusted according to what is described in the aerial view.

It may be realized by warp operator to twist multiple images. The warp operator may twist the plurality of images based on a target angle to obtain a plurality of twisted images. The twisted image may completely show the surroundings of the autonomously driven vehicle.

The neural network processor may implement the function of the warp operator by executing instructions. Since the warp operator supports parallel processing in the channel direction, in order to adapt the operation logic of the warp operator, the neural network processor may also perform parallel processing in the channel direction. With the development of neural network processor, the number of channels supported by the neural network processor for parallel processing is increasing, while the number of channels for input feature data processed by warp operator is limited, compared with the number of channels supported by the neural network processor for parallel processing, the number of channels for input feature data is less. In the process of one operation, the entire computing resources of neural network processor may not be fully utilized, which results in a waste of computing resources.

In order to solve the problem of waste of computational resources of a neural network processor, embodiments of the present disclosure provide an instruction generating method for a neural network processor, wherein the instruction generating method may splice a plurality of input feature data, so that the number of channels supported by the neural network processor for parallel processing is equal to the number of channels of the spliced plurality of input feature data, thereby fully utilizing the computational resources of the neural network processor and improving the utilization of the computational resources.

### Exemplary device

Embodiments of the present disclosure relate to a compile-side device and an execution side device, wherein the compile-side device is used for generating instructions executable by a neural network processor, and the execution side device is used for performing neural network operations through the instructions provided by operating the compile-side device, and these operations include but are not limited to: a convolution operation, a pooling operation, an activation function operation, etc.

In some embodiments, the compile-side device may include, but is not limited to, a personal computer, a server computer, a multi-processor system, a microprocessor-based system, etc.

In some embodiments, the execution side device may include, but is not limited to, a neural network processor or a neural network chip or the like.

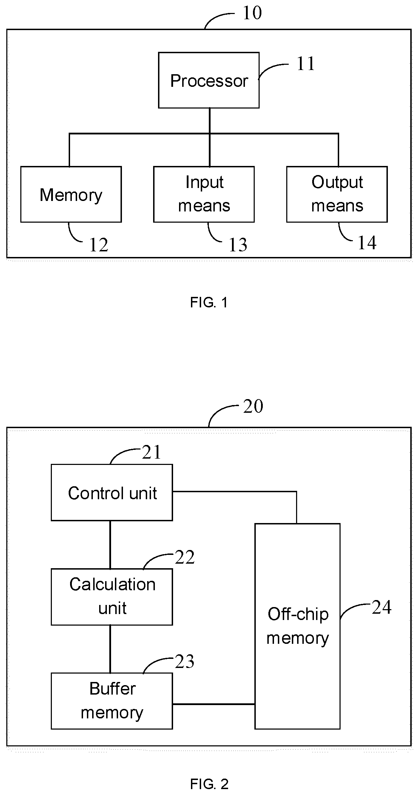

FIG. 1 is a block diagram of a compile-side device 10 according to an embodiment of the present disclosure. As shown in FIG. 1, the compile-side device 10 includes at least one processor 11 and a memory 12.

The processor 11, which is used to execute the instruction generating method for a neural network processor in embodiments of the present disclosure, may be a processor supporting the compilation of a neural network instruction sequence, or another form of processing unit having compilation processing capabilities and/or instruction execution capabilities.

The memory 12 may include one or more computer program products, which may include various forms of computer-readable storage media. One or more computer program instructions may be stored on a computer readable storage medium, and the processor 11 may execute the program instructions to implement the following instruction generating method for a neural network processor.

In some embodiments, as shown in FIG. 1, the compile-side device 10 may further include an input means 13 and an output means 14. The input means 13 may include e.g., a keyboard, a mouse, etc. for the compiler to input the parameters of the neural network, e.g., the size of the input feature map, the size of the output feature map, the convolution kernel, etc. for each layer of the neural network. The output means 14 may include, for example, a display, speakers, a printer, a communications network and its connected remote output devices, etc. for a compiler to view final results of the compilation or intermediate data during the compilation process, etc.

It should be noted that the embodiments of the present disclosure are not limited as to the specific structure of the compile-side device 10, which may include more or fewer components than those shown in FIG. 1. For example, the compile-side device 10 may also include components such as buses, input/output interfaces, etc.

FIG. 2 is a schematic structural diagram of another execution side device 20 provided by an embodiment of the present disclosure. As shown in FIG. 2, the execution side device 20 may include: a control unit 21 and a calculation unit 22, wherein the control unit 21 is used for executing instructions to control the calculation unit 22 to perform the following method for processing a multi-dimensional array via a neural network processor.

In some embodiments, the execution side device 20 may further include a buffer memory 23 and an off-chip memory 24. The buffer memory 23 may include one or more separate buffer memories or processing units with data caching capabilities and may access the off-chip memory 24 under the control of the control unit 21. The off-chip memory 24 may include one or more separate memories or processing units with data storage capabilities and may be accessed by the buffer memory 23 under the control of the control unit 21.

It should be noted that embodiments of the present disclosure are not limited as to the specific configuration of the execution side device 20, which may include more or fewer components than those shown in FIG. 2. For example, the execution side device 20 may further include components such as a bus.

### Exemplary method

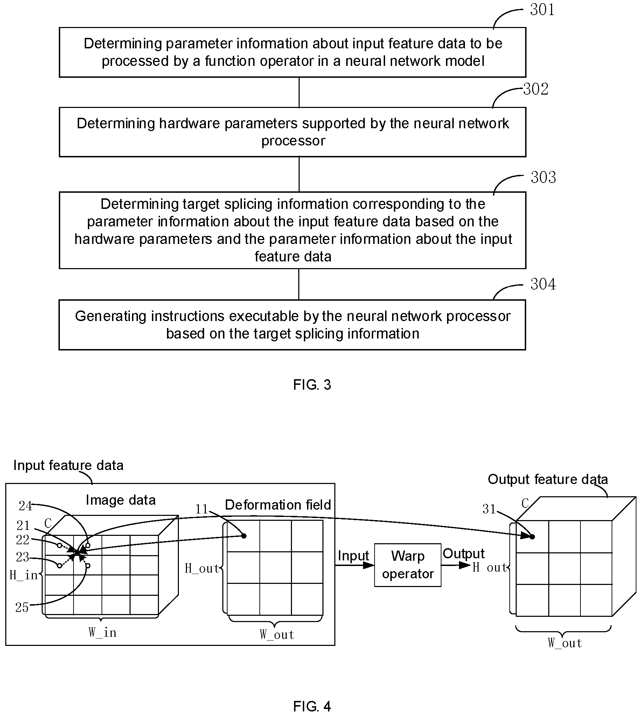

FIG. 3 provides an instruction generating method for a neural network processor, which may be applied to a compile-side device, according to an embodiment of the present disclosure. As shown in FIG. 3, the method includes the following steps 301-305.

Step 301: determining parameter information about input feature data to be processed by a function operator in a neural network model.

In some embodiments, the neural network model may be a model that is applied in a number of different areas of natural language processing, computer vision, speech recognition, image processing, etc. In many of the above fields, different neural network models may be designed based on application scenarios and application requirements, and the present disclosure is not limited to application scenarios and model structures for neural network models.

A neural network model may consist of multiple neural network layers, each of which may include one or more function operators. Illustratively, the function operator in the neural network model may be any one of a warp operator, a resizing operator (e.g., resize), and a pooling operator (e.g., pooling). The warp operator may be used to transform the input feature data into another view output, or the warp operator may also be used to move the input feature data to a target location. The input feature data is input data of a Warp operator. For example, the warp operator may be implemented by torch.grid_sample() function. A resize operator is used to resize the image. A pooling operator is a commonly used down-sampling operation in deep learning, which is mainly used to reduce the computational complexity and extract and compress the input features. The neural network processor supports parallel processing of the resize operator and the pooling operator in a plurality of directions, for example, parallel in an H (height) direction, parallel in a W (width) direction, or parallel in a C (channel) direction.

An instruction generating method for a neural network processor provided by the present disclosure is exemplified below with an example in which a function operator in a neural network model is a warp operator.

In the operation of the warp operator, the size of the deformation field in the input feature data is consistent with the size of the output feature data, and the pixel point in the deformation field corresponding to each pixel point in the output feature data may be found. In addition, the value of each pixel point in the output feature data may be determined based on the pixel point in the deformation field corresponding thereto.

The value corresponding to the pixel point in the deformation field is determined based on the pixel point in the input feature data; by processing the pixel point in the input feature data corresponding to the pixel point in the deformation field, the value corresponding to the pixel point in the deformation field may be obtained; and finally, the value corresponding to the pixel point in the deformation field is taken as the value of the pixel point in the output feature data.

FIG. 4 illustrates a process of performing a warp operation on input feature data.

Illustratively, as shown in FIG. 4, the input feature data of the warp operator includes image data and a deformation field.

The parameters of the image data include N, C, H_in and W_in. N represents N image data. C represents the number of channels per image data. H_in represents the height of the image data. W_in represents the width of the image data.

The parameters of the deformation field include N, H_out, W_out and 2. N represents N deformation fields. H_out represents the height of the deformation field. W_out represents the width of the deformation field. 2 represents two-dimensional coordinates (x, y). H_out, W_out are consistent with the height dimension and width dimension of the output feature data output by the warp operator.

Since the H_out and the W_out coincides with the height dimension and the width dimension of the output feature data, i.e., the dimension of the output feature data coincides with the dimension of the deformation field. In conjunction with the foregoing, it may be seen that the value of each pixel point in the output feature data may be determined based on the value in the deformation field corresponding thereto. For example, for a pixel point 31 in the output feature data, the pixel point 11 in the output feature data corresponding to the pixel point 31 may be found in the deformation field. The position of the pixel point 31 in the output feature data coincides with the position of the pixel point 11 in the deformation field. The value of the pixel point 31 may be derived from the value corresponding to the pixel point 11. The value corresponding to the pixel point 11 is determined from the pixel point 21 corresponding to the pixel point 11 in the image data. Finally, the value corresponding to the pixel point 11 is taken as the value corresponding to the pixel point 31 in the output data.

Illustratively, the values corresponding to the pixel points 11 in the deformation field may be obtained by performing a bilinear interpolation operation on the pixel points 21 in the image data. The bilinear interpolation operation may be obtained by processing four pixel points around the pixel point 21 (i.e., pixel points 22, 23, 24, and 25).

In addition, the value corresponding to the pixel point 11 in the deformation field may also be obtained by performing a nearest neighbor interpolation operation, a linear interpolation operation or a bicubic interpolation operation on the pixel point 21 in the image data, and the present disclosure is not limited thereto.

In some embodiments, the parameter information about the input feature data includes at least the number of channels of the input feature data. For example, the number of channels of the input feature data in the parameter information about the input feature data is 16.

In the operation process of a warp operator, the size of input data includes H, W and C, and the neural network processor may perform parallel processing of data in H direction, W direction or C direction. Since the pixel points in the deformation field are determined based on H and W, if there are two pixel points in the deformation field both corresponding to the same pixel point of the input feature data, it is uncertain for which pixel point of the above-mentioned two pixel points the corresponding input feature data is firstly read, so when the neural network processor reads data in the H direction or the W direction, there may be data reading conflicts, thereby affecting the operation of the warp operator. However, when performing parallel processing in the C direction, the above-mentioned problem does not exist, and therefore the present solution can efficiently use the computing resources of the neural network processor by improving the parallel processing in the C direction. Thus, the parameter information about the input feature data includes at least the number of channels of the input feature data.

In some examples, the input feature data may be physical data such as image data or voice data. The image data or voice data may be represented in the form of a multi-dimensional array. The multi-dimensional array may include at least an H-direction array, a W-direction array, and a C-direction array. For example, the multi-dimensional array includes an H-direction array, a W-direction array, and a C-direction array. Taking the processing of the above-mentioned one multi-dimensional array by the warp operator as an example, the warp operator may perform twisting processing on the basis of the data in the H direction, the W direction and the C direction in the one multi-dimensional array, thereby obtaining a twisted result.

Step 302: determining hardware parameters supported by the neural network processor.

The neural network processor is an apparatus for processing a large number of computing tasks in an artificial intelligence application. Although a processor (e.g., a CPU) has a certain data processing capability, for a specific processing task, such as image processing and voice processing, the CPU has a relatively low execution efficiency and a relatively poor execution effect; therefore, the neural network processor is required to perform the above-mentioned specific data operation.

Illustratively, the neural network processor may be any accelerator capable of executing a neural network model, e.g., the neural network processor may be a brain processing unit processor

(BPU), a neural network processing unit (NPU), etc. The neural network processor may specifically include various types of Graphics Processing Unit (GPU), Field Programmable Gate Array (FPGA) and Application Specific Integrated Circuit (ASIC), etc., and the neural network processor may be a homogeneous accelerator or a heterogeneous accelerator; alternatively, in embodiments of the present invention, neither the type nor the structure of the neural network processor is specifically limited.

In some embodiments, the compile-side device is configured to compile the neural network model for optimization so that the neural network model operates efficiently on the neural network processor. The compile-side device may pre-acquire the hardware parameters supported by the neural network processor so as to compile and optimize the neural network model based on the hardware parameters supported by the neural network processor.

The hardware parameters supported by the neural network processor include hardware parameters of various operations such as a convolution operation, a pooling operation, an activation operation and a parallel processing operation supported by the neural network processor. For example, the hardware parameters of the neural network processor include, but are not limited to, parameters such as a convolution step size, a pooling step size, the number of parallel processing supported by the neural network processor.

Step 303: determining target splicing information corresponding to the parameter information about the input feature data based on the hardware parameters and the parameter information about the input feature data.

The target splicing information includes the number of spliced channels and the number of spliced data sets.

As seen in conjunction with step 302, the hardware parameters include parameters of operations for parallel processing supported by the neural network processor. For example, the hardware parameters include the number of channels supported by the neural network processor for parallel processing. The parameter information about the input feature data includes the number of channels of the input feature data, and based on the number of channels supported by the neural network processor for parallel processing and the number of channels of the input feature data, target splicing information corresponding to the parameter information about the input feature data may be determined, wherein the target splicing information at least includes the number of spliced channels and the number of spliced data sets.

Step 304: generating instructions executable by the neural network processor based on the target splicing information.

Instructions executable by the neural network processor are generated based on the number of spliced channels and the number of spliced data sets in the target splicing information, so as to efficiently use the computing resources of the neural network processor.

The compile-side device in the embodiment of the present disclosure takes full account of the hardware parameters of the neural network processor and the parameter information about the input feature data when generating the instructions executable by the neural network processor, so that the generated executable instruction may efficiently utilize the computing resources of the neural network processor. That is, the present disclosure can avoid the problem of waste of computational resources due to the fact that the number of channels supported by the neural network processor for parallel processing is much greater than the number of channels of input feature data, thereby fully utilizing the computational resources of the neural network processor.

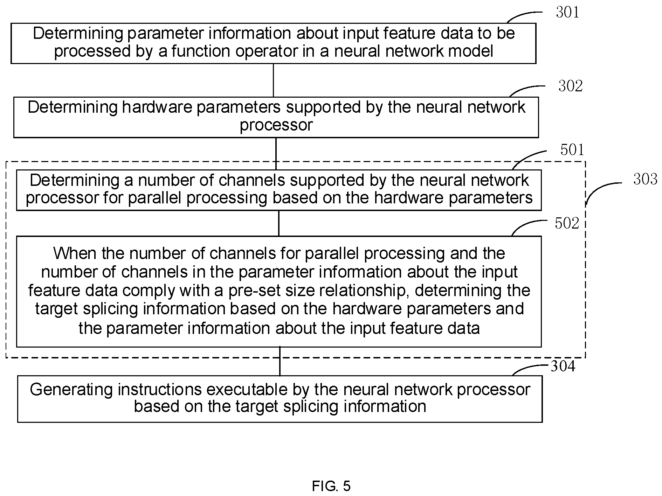

In some embodiments, as shown in FIG. 5, step 303 described above may include steps 501-502.

Step 501: determining a number of channels supported by the neural network processor for parallel processing based on the hardware parameters.

As seen in conjunction with step 302, the parameters of the operations for parallel processing supported by the neural network processor may include the number of channels supported by the neural network processor for parallel processing. For example, the number of channels supported by the neural network processor for parallel processing is 64.

Step 502: when the number of channels for parallel processing and the number of channels in the parameter information about the input feature data comply with a pre-set size relationship, determining the target splicing information based on the hardware parameters and the parameter information about the input feature data.

In some embodiments, the relationship between the number of channels for parallel processing and the number of channels in the parameter information about the input feature data includes: the number of channels for parallel processing is much greater than the number of channels in the parameter information about the input feature data, and the number of channels for parallel processing is equal to the number of channels in the parameter information about the input feature data.

When the number of channels for parallel processing is much greater than the number of channels in the parameter information about the input feature data, if the neural network processor is used to perform operations for parallel processing on the input feature data, the computational resources of the neural network processor will be wasted.

When the number of channels for parallel processing is equal to the number of channels in the parameter information about the input feature data, if the neural network processor is used to perform a parallel processing operation on the input feature data, the computing resources of the neural network processor may be fully utilized.

When the number of channels for parallel processing is much greater than the number of channels in the parameter information about the input feature data, the target splicing information may be obtained based on the hardware parameters and the parameter information about the input feature data. The plurality of input feature data is spliced based on the target splicing information, so that the number of channels of the spliced plurality of input feature data is consistent with the number of channels supported by the neural network processor for parallel processing, thereby efficiently utilizing the computing resources of the neural network processor.

When generating instructions executable by a neural network processor, a compile-side device in an embodiment of the present disclosure determines target splicing information based on the number of channels supported to be processed by the neural network processor and the number of channels in parameter information in input feature data, and uses the target splicing information to splice a plurality of input feature data so as to expand the number of channels. Then the executable instruction generated using the expanded number of channels can make efficient use of the computational resources of the neural network processor.

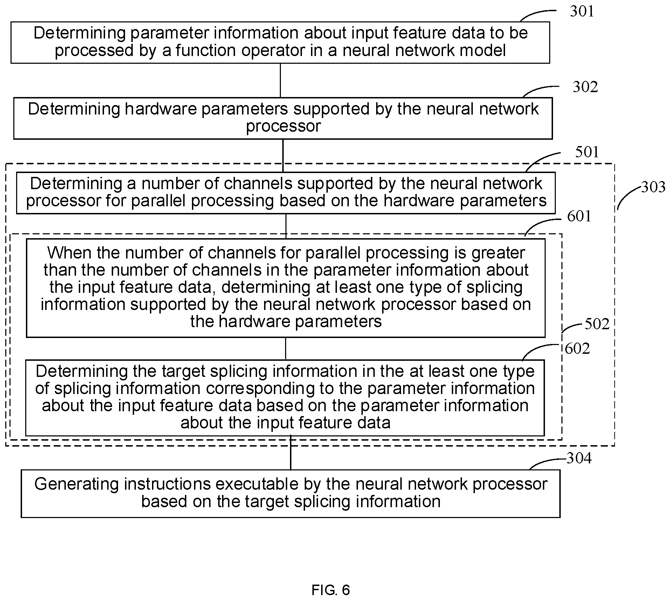

In some embodiments, as shown in FIG. 6, the above-mentioned step 502 of determining that the number of channels for parallel processing and the number of channels in the parameter information about the input feature data comply with a pre-set size relationship, and determining the target splicing information based on the hardware parameters and the parameter information about the input feature data may include steps 601-602.

Step 601: when the number of channels for parallel processing is greater than the number of channels in the parameter information about the input feature data, determining at least one type of splicing information supported by the neural network processor based on the hardware parameters.

Illustratively, in the case where the number of channels for parallel processing is greater than the number of channels in the parameter information about the input feature data, at least one type of splicing information supported by the neural network processor may be determined based on the parameters of the parallel processing operation supported by the neural network processor in the hardware parameters. For example, the splicing information supported by the neural network processor includes two types of first splicing information that the number of spliced channels is 16 and the number of spliced data sets is 4, and second splicing information that the number of spliced channels is 32 and the number of spliced data sets is 2. The present disclosure is not limited to the splicing information supported by the neural network processor.

Step 602: determining the target splicing information in the at least one type of splicing information corresponding to the parameter information about the input feature data based on the parameter information about the input feature data.

Illustratively, after determining at least one type of splicing information supported by the neural network processor, target splicing information corresponding to the number of channels in the parameter information about the input feature data may be determined in the at least one type of splicing information based on the number of channels in the parameter information about the input feature data.

For example, the number of channels for inputting the feature data is 16. In conjunction with step 601, based on the two types of splicing information supported by the neural network processor, it may be determined that the number of spliced channels in the target splicing information corresponding to the parameter information about the input feature data is 16, and the number of spliced data sets is 4.

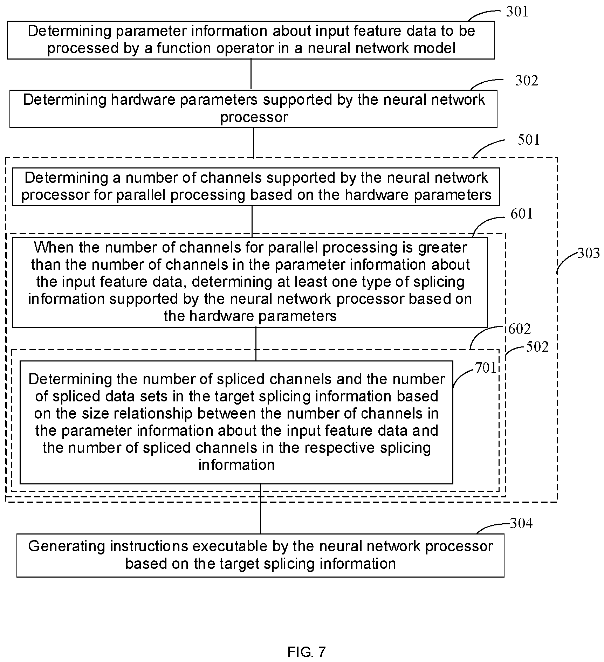

In some embodiments, as shown in FIG. 7, step 602 described above may include step 701.

Step 701: determining the number of spliced channels and the number of spliced data sets in the target splicing information based on the size relationship between the number of channels in the parameter information about the input feature data and the number of spliced channels in the respective splicing information.

In conjunction with the above-mentioned step 601, it may be seen that the number of spliced channels in each type of splicing information in at least one type of splicing information is different. Therefore, the number of spliced channels and the number of spliced data sets in the target splicing information may be determined based on the number of channels in the parameter information about the input feature data and the number of channels corresponding to the respective concatenation information.

In some embodiments, the size relationship between the number of channels in the parameter information about the input feature data and the number of channels in the respective splicing information includes: the number of channels in the parameter information about the input feature data is less than the number of spliced channels in a certain splicing information, the number of channels in the parameter information about the input feature data is equal to the number of spliced channels in a certain splicing information, and the number of channels in the parameter information about the input feature data is greater than the number of spliced channels in a certain splicing information.

When the number of channels in the parameter information about the input feature data is less than the number of spliced channels in a certain type of splicing information, it is possible to continue to judge the size relationship between the number of channels in the first parameter information and the number of spliced channels in other splicing information. If the number of spliced channels in the other splicing information is greater than the number of channels in the parameter information about the input feature data, the splicing information with the smallest difference between the number of spliced channels and the number of channels in the parameter information about the input feature data may be selected from the other splicing information as the target splicing information.

When the number of channels in the parameter information about the input feature data is equal to the number of spliced channels in a certain splicing information, the splicing information may be taken as the target splicing information.

When the number of channels in the parameter information about the input feature data is greater than the number of spliced channels in a certain splicing information, it is possible to continue to judge the size relationship between the number of channels in the parameter information about the input feature data and the number of spliced channels in other splicing information. If there is a splicing information, in which the number of spliced channels is greater than the number of channels in the parameter information about the input feature data, and the difference between the number of spliced channels in the splicing information and the number of channels in the parameter information about the input feature data is the minimum compared with other splicing information, then the splicing information is the target splicing information.

By comparing the number of channels in the parameter information about the input feature data with the number of channels in other splicing information, the matching target splicing information may be screened for the input feature data, so as to efficiently utilize the hardware performance of the neural network processor.

For example, the number of channels in the parameter information about the input feature data is 16, and by combining the two types of splicing information in the above-mentioned step 601, the first type of splicing information may be taken as the target splicing information, i.e., the number of spliced channels is 16, and the number of spliced data sets is 4.

When generating an instruction executable by the neural network processor, the compile-side device in the embodiment of the present disclosure fully considers at least one type of splicing information supported by the neural network processor and the number of channels in the parameter information about the input feature data, and determines the target splicing information, and therefore the matching degree between the determined target splicing information and the input feature data is higher, thereby facilitating the operation of the input feature data, and further improving the operation efficiency.

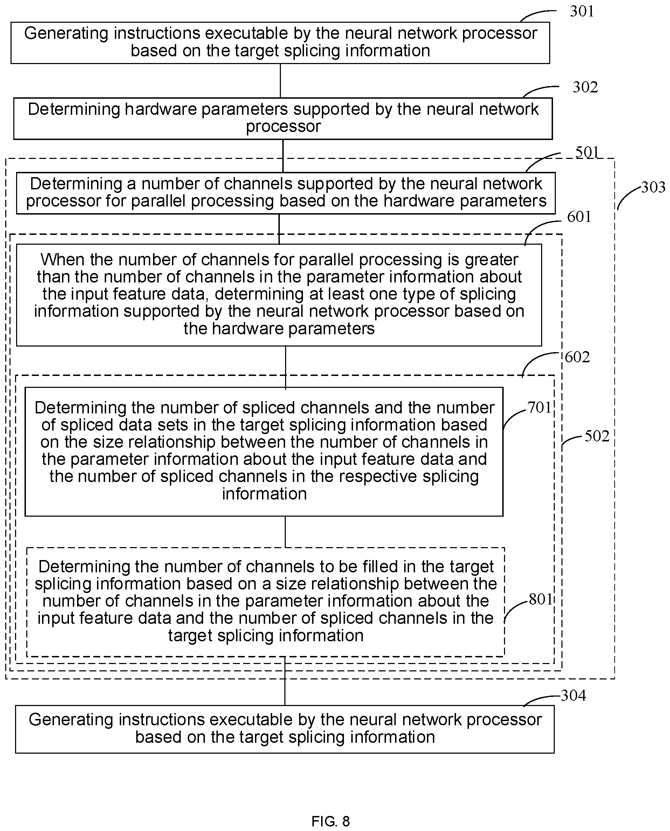

In some embodiments, as shown in FIG. 8, after step 701, the method further includes step 801.

Step 801: determining the number of channels to be filled in the target splicing information based on a size relationship between the number of channels in the parameter information about the input feature data and the number of spliced channels in the target splicing information.

In conjunction with step 701, it may be seen that the number of spliced channels in the target splicing information is greater than or equal to the number of channels in the parameter information about the input feature data. When the number of spliced channels in the target splicing information is equal to the number of channels in the parameter information about the input feature data, the number of channels to be filled in the target splicing information is 0. When the number of spliced channels in the target splicing information is greater than the number of channels in the parameter information about the input feature data, a difference between the number of spliced channels in the target splicing information and the number of channels in the parameter information about the input feature data may be determined first, and the difference is the number of channels to be filled in the target splicing information. Then channels are filled based on the number of channels to be filled, so that the sum of adding the number of filled channels and the number of channels in the parameter information about the input feature data is consistent with the number of spliced channels in the target splicing information.

For example, the number of channels in the parameter information about the input feature data is 15. If the number of spliced channels in the target splicing information is 16, then the difference 1 between the number of spliced channels in the target splicing information (i.e., 16) and the number of channels in the parameter information about the input feature data (i.e., 15) may be determined first. The difference of 1 is taken as the number of channels to be filled. Thus, one channel is filled, and the filled one channel is added with the number of 15 channels in the parameter information about the input feature data and then the sum is consistent with the number of spliced channels 16 in the target splicing information, and then the processed input feature data may be for parallel processing.

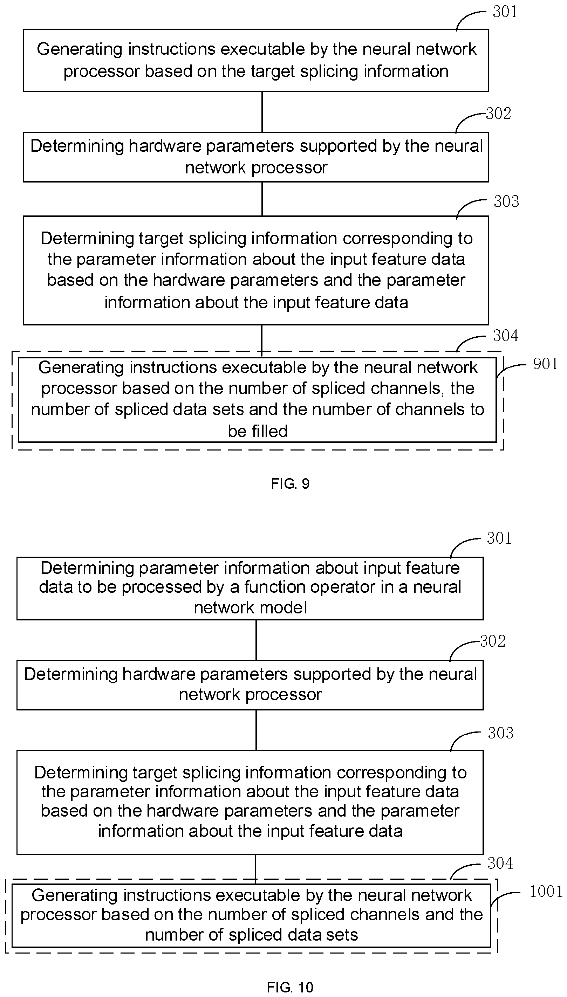

In some embodiments, as shown in FIG. 9, step 304 described above may include step 901.

Step 901: generating instructions executable by the neural network processor based on the number of spliced channels, the number of spliced data sets and the number of channels to be filled.

After the target splicing information is determined by using the hardware parameters and the parameter information about the input feature data, if the number of channels in the parameter information about the input feature data is inconsistent with the number of spliced channels in the target splicing information, the number of channels to be filled needs to be further determined. The instructions executable by the neural network processor may then be generated using the number of spliced channels, the number of spliced data sets, and the number of channels to be filled in the target splicing information.

In some embodiments, as shown in FIG. 10, step 304 described above may include step 1001.

Step 1001: generating instructions executable by the neural network processor based on the number of spliced channels and the number of spliced data sets.

After the target splicing information is determined by using the hardware parameters and the parameter information about the input feature data, if the number of channels in the parameter information about the input feature data is consistent with the number of spliced channels in the target splicing information, instructions executable by the neural network processor may be generated by using the number of spliced channels and the number of spliced data sets in the target splicing information .

When generating, by the compile device, instructions executable by the neural network processor, it is found that the number of channels supported by the neural network processor for parallel processing is much greater than the number of channels in the parameter information about the input feature data. Then target splicing information corresponding to the parameter information about the input feature data is determined based on the parameter information about the input feature data and hardware parameters of the neural network processor, and finally an executable instruction of the neural network processor is generated based on the target splicing information. That is, in the embodiment of the present disclosure, based on the number of channels supported by the neural network processor and the number of channels in the parameter information about the input feature data, a plurality of input feature data are spliced so as to increase the number of channels, thereby efficiently utilizing the processing capability of the neural network processor and improving the data processing efficiency.

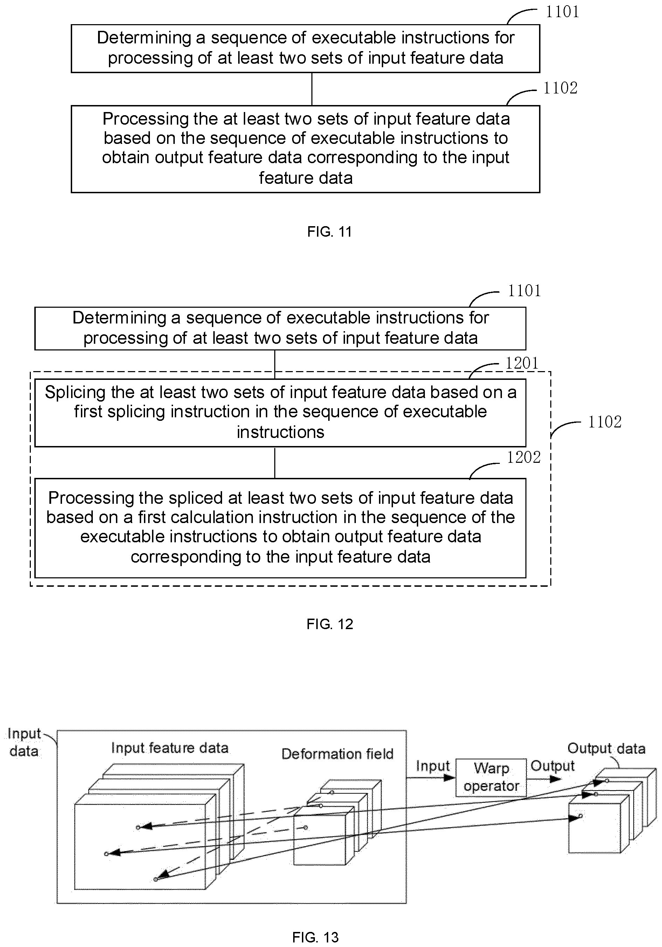

FIG. 11 provides a method for processing input feature data by a neural network processor, which may be applied to an execution side device, according to an embodiment of the present disclosure. As shown in FIG. 11, the method includes steps 1101-1102.

Step 1101: determining a sequence of executable instructions for processing of at least two sets of input feature data.

In some embodiments, the sequence of executable instructions at least includes a splicing instruction. The splicing instruction is used for splicing at least two sets of input feature data.

Illustratively, the sequence of executable instructions enables the neural network processor to process a plurality of input feature data in parallel by splicing at least two sets of input feature data such that the number of channels for parallel processing by the neural network processor increases, thereby efficiently utilizing the computational resources of the neural network processor and improving data processing efficiency.

After generating the sequence of the executable instructions, the compile-side device may directly send the sequence of the executable instructions to the neural network processor, or may also send a plurality of operation instructions to the neural network processor in the form of a removable hard disk.

It is noted that the sequence of executable instructions includes a plurality of instructions that may be executable by the neural network processor in any of the embodiments shown in FIGS. 3-10 described above.

Step 1102: processing the at least two sets of input feature data based on the sequence of executable instructions to obtain output feature data corresponding to the input feature data.

After receiving the sequence of executable instructions, the neural network processor executes the sequence of executable instructions to process the at least two sets of input feature data to obtain output feature data corresponding to the at least two sets of input feature data.

Embodiments of the present disclosure provide a method for processing input feature data by a neural network processor by determining a sequence of executable instructions that the neural network processor can support, and the sequence of executable instructions may splice at least two sets of input feature data. Thus, the neural network processor can improve the utilization of the computational resources of the neural network processor when executing the sequence of executable instructions.

In some embodiments, as shown in FIG. 12, step 1102 described above may include steps 1201-1202.

1201: splicing the at least two sets of input feature data based on a first splicing instruction in the sequence of executable instructions.

In conjunction with the above-mentioned solutions of FIGS. 3-10, when the number of channels of each input feature data in the at least two sets of input feature data is less than the number of channels supported by the neural network processor for parallel processing, and the number of channels in the parameter information about the input feature data is equal to the number of spliced channels in the target splicing information, a first splicing instruction in the sequence of the executable instructions may be executed to splice the at least two sets of input feature data so that the number of spliced channels is equal to the number of channels supported by the neural network processor for parallel processing. The first splicing instruction is generated based on the target splicing information.

Illustratively, as shown in FIG. 13, a plurality of input feature data may be spliced based on the first splicing instruction, and then the plurality of input feature data and a plurality of deformation fields are as input data for parallel processing by a warp operator, thereby obtaining output data.

Step 1202: processing the spliced at least two sets of input feature data based on a first calculation instruction in the sequence of the executable instructions to obtain output feature data corresponding to the input feature data.

After the at least two sets of input feature data are spliced, the first calculation instruction in the sequence of the executable instructions may continue to be executed, and parallel processing is performed on the spliced at least two sets of input feature data so as to obtain output feature data corresponding to the at least two sets of input feature data.

The embodiment of the present disclosure provides a method for processing input feature data by a neural network processor, wherein the input feature data is spliced by the first splicing instruction, and then the spliced input feature data is calculated by a first calculation instruction, so that the output feature data may be quickly obtained and the data processing efficiency may be improved.

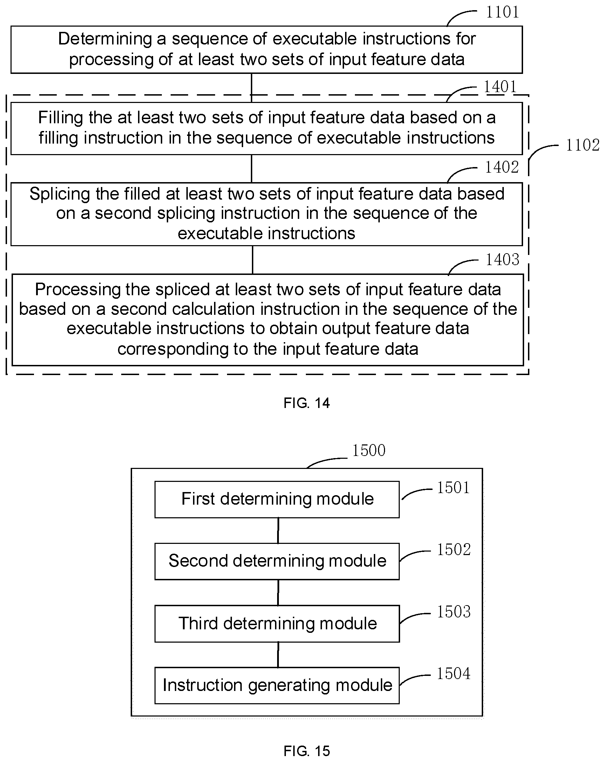

In some embodiments, as shown in FIG. 14, step 1102 described above may include steps 1401-1403.

Step 1401: filling the at least two sets of input feature data based on a filling instruction in the sequence of executable instructions.

In conjunction with the above-mentioned solutions of FIGS. 1-10, when the number of channels of each input feature data in the at least two sets of input feature data is less than the number of channels supported by the neural network processor for parallel processing, and the number of channels in the parameter information about the input feature data is less than the number of spliced channels in the target splicing information, the channels of the at least two sets of input feature data may be firstly filled based on a filling instruction in the sequence of executable instructions, so that the number of channels of each set of input feature data in the filled at least two sets of input feature data is consistent with the number of spliced channels in the target splicing information.

Step 1402: splicing the filled at least two sets of input feature data based on a second splicing instruction in the sequence of the executable instructions.

After splicing at least two sets of channels of the input feature data, the second splicing instruction in the sequence of executable instructions may continue to be executed to splice the at least two sets of input feature data such that the number of spliced channels is equal to the number of processing channels supported by the neural network processor. The second splicing instruction is generated based on the target splicing information.

Step 1403: processing the spliced at least two sets of input feature data based on a second calculation instruction in the sequence of the executable instructions to obtain output feature data corresponding to the input feature data.

After the at least two sets of input feature data are spliced, the second calculation instruction in the sequence of the executable instructions may continue to be executed, and parallel processing is performed on the spliced at least two sets of input feature data so as to obtain output feature data corresponding to the at least two sets of input feature data.

The embodiment of the present disclosure provides a method for processing a multi-dimensional array by a neural network processor, if the number of channels in parameter information about input feature data is less than the number of spliced channels in target splicing information, the input feature data may be filled by a filling instruction, and then a plurality of the filled input feature data may be spliced using a second splicing instruction . Finally, the spliced multiple input feature data may be processed by using the second computing instruction to obtain quickly output feature data and improve the efficiency of data processing.

### Exemplary apparatus

FIG. 15 provides an instruction generating apparatus for a neural network processor according to an embodiment of the present disclosure. As shown in FIG. 15, the instruction generating apparatus 1500 for a neural network processor includes a first determining module 1501, a second determining module 1502, a third determining module 1503 and an instruction generating module 1504.

A first determining module 1501 is configured to determine parameter information about input feature data to be processed by a function operator in a neural network model;

a second determining module 1502 is configured to determine hardware parameters supported by the neural network processor;

a third determining module 1503 is configured to determine target splicing information corresponding to the parameter information about the input feature data based on the hardware parameters and the parameter information about the input feature data, wherein the target splicing information includes the number of spliced channels and the number of spliced data sets; and

an instruction generating module 1504 is configured to generate instructions executable by the neural network processor based on the target splicing information.

In some embodiments, the third determining module 1503 is further configured to determine the number of channels supported by the neural network processor for parallel processing based on the hardware parameters; to determine that the number of channels for parallel processing and the number of channels in the parameter information about the input feature data comply with a pre-set size relationship, and to determine the target splicing information based on the hardware parameters and the parameter information about the input feature data.

In some embodiments, the third determining module 1503 is further configured to determine that the number of channels for parallel processing is greater than the number of channels in the parameter information about the input feature data, to determine at least one type of splicing information supported by the neural network processor based on the hardware parameters; and to determine, based on the parameter information about the input feature data, the target splicing information in the at least one type of splicing information corresponding to the parameter information about the input feature data.

In some embodiments, the third determining module 1503 is further configured to determine the number of spliced channels and the number of spliced data sets in the target splicing information based on the size relationship between the number of channels in the parameter information about the input feature data and the number of spliced channels in the respective splicing information.

In some embodiments, the third determining module 1503 is further configured to determine the number of channels to be filled in the target splicing information based on a size relationship between the number of channels in the parameter information about the input feature data and the number of spliced channels in the target splicing information.

In some embodiments, the instruction generating module 1504 is further configured to generate instructions executable by the neural network processor based on the number of spliced channels, the number of spliced data sets, and the number of channels to be filled.

In some embodiments, the instruction generating module 1504 is further configured to generate instructions executable by the neural network processor based on the number of splice channels and the number of spliced data sets.

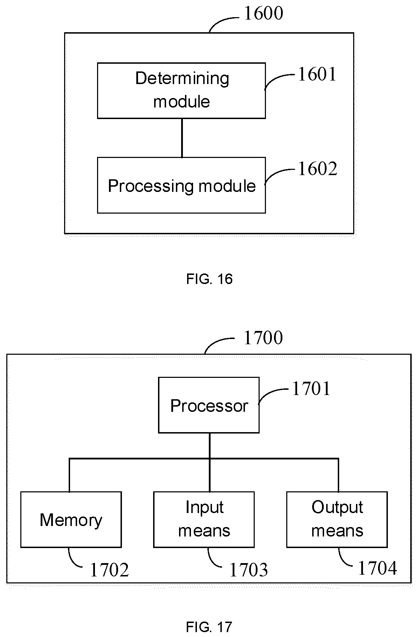

FIG. 16 provides an apparatus for processing feature data by a neural network processor. As shown in FIG. 16, the apparatus 1600 for processing feature data by a neural network processor includes a determining module 1601 and a processing module 1602.

A determining module 1601 is configured to determine a sequence of executable instructions for processing of at least two sets of input feature data.

A processing module 1602 is configured to process the at least two sets of input feature data based on the sequence of the executable instructions to obtain output feature data corresponding to the input feature data.

In some embodiments, the processing module 1602 is further configured to splice at least two sets of input feature data based on a first splicing instruction in the sequence of executable instructions; to process the spliced at least two sets of input feature data based on a first calculation instruction in the sequence of the executable instructions to obtain output feature data corresponding to the input feature data.

In some embodiments, the processing module 1602 is further configured to fill at least two sets of input feature data based on a filling instruction in the sequence of executable instructions; to splice the filled at least two sets of input feature data based on a second splicing instruction in an sequence of the executable instructions; and to process the spliced at least two sets of input feature data based on a second calculation instruction in the sequence of the executable instructions to obtain output feature data corresponding to the input feature data.

### Exemplary electronic device

FIG. 17 is a block diagram of an electronic device according to an embodiment of the present disclosure. As shown in FIG. 17, an electronic device 1700 includes one or more processors 1701 and memory 1702.

The processor 1701 may be a central processing unit (CPU) or other form of processing unit having data processing capabilities and/or instruction execution capabilities, and may control other components in the electronic device 1700 to perform desired functions.

The storage 1702 may include one or more computer program products, which may include various forms of computer-readable storage media, such as volatile memory and/or non-volatile memory. Volatile memory may include, for example, random-access memory (RAM) and/or cache, etc. Non-volatile memory may include, for example, read-only memory (ROM), hard disk, flash memory, etc. One or more computer program instructions may be stored on the computer-readable storage medium, and the processor 1701 may execute the program instructions to implement the instruction generation method of the various embodiments of the present disclosure above or other desired functions.

In one example, the electronic device 1700 may further include: input means 1703 and output means 1704, which are interconnected by a bus system and/or other form of connection mechanism (not shown).

Of course, for simplicity, only some of the components of the electronic device 1700 relevant to the present disclosure are shown in FIG. 17, omitting components such as buses, input/output interfaces, etc. In addition, the electronic device 1700 may further include any other suitable components depending on the particular application.

### Exemplary computer program product and computer readable storage medium

In addition to the methods and devices described above, embodiments of the present disclosure may also provide a computer program product including computer program instructions which, when executed by a processor, cause the processor to perform steps of an instruction generating method or other methods according to various embodiments of the present disclosure as described in the "Exemplary Method" section of the description above.

The computer program product may include program codes for performing operations of embodiments of the present disclosure written in any combination of one or more programming languages, including object-oriented programming languages, such as Java, C++, etc. and conventional procedural programming languages, such as the "C" language or similar programming languages. The program codes may be executed entirely on the user computing device, partially on the user device, as a stand-alone software package, partially on the user computing device, partially on a remote computing device, or entirely on the remote computing device or server.

In addition, embodiments of the present disclosure may also provide a computer-readable storage medium having stored thereon computer program instructions, which when executed by a processor, cause the processor to perform steps in an instruction generating method or other methods according to various embodiments of the present disclosure as described in the "Exemplary Method" section above of this specification.

The computer-readable storage medium may take any combination of one or more readable media. The readable medium may be a readable signal medium or a readable storage medium. The readable storage medium may be, for example but not limited to, an electronic, magnetic, optical, electromagnetic, infrared, or semiconductor system, apparatus, or component, or a combination of any of the foregoing. More specific examples (a non-exhaustive list) of the readable storage medium include: an electrical connection having one or more wires, a portable computer diskette, a hard disk, a Random-access Memory (RAM), a read-only memory (ROM), an Erasable Programmable Read-only Memory (EPROM or flash memory), an optical fiber, a portable Compact Disk Read-only Memory (CD-ROM), an optical storage component, a magnetic storage component, or any suitable combination thereof.

The general principles of the present disclosure have been described above in conjunction with specific embodiments, however, it is to be noted that the advantages, superiorities, effects, etc. mentioned in the present disclosure are merely exemplary and not limiting, and such advantages, superiorities, effects, etc. must not be construed as being necessary to the various embodiments of the present disclosure. Furthermore, the particular details disclosed above are for purposes of illustration and description only and are not intended to be limiting, as the disclosure is not limited to the particular details disclosed above.

The block diagrams of components, apparatuses, devices, and systems referred to in this disclosure are merely illustrative examples and are not intended to require or imply that the connections, arrangements, and configurations shown in the block diagrams are required. The components, apparatuses, devices, systems may be connected, arranged, configured in any manner, as will be appreciated by a person skilled in the art. Words such as "including", "comprising", "having", and the like are open-ended words that mean "including, but not limited to", and are used interchangeably. The words "or" and "and" as used herein refer to the word "and/or" and may be used interchangeably therewith unless the context clearly indicates otherwise. As used herein, the word "such as" refers to the phrase "such as, but not limited to" and is used interchangeably therewith.

It should also be noted that in the apparatus, devices and methods of the present disclosure, the components or steps may be disassembled and/or recombined. Such decompositions and/or recombinations should be considered as equivalents of the present disclosure.

The previous description of the disclosed aspects is provided to enable any person skilled in the art to make or use the present disclosure. Various modifications to these aspects will be readily apparent to a person skilled in the art, and the generic principles defined herein may be applied to other aspects without departing from the scope of the disclosure. Thus, the present disclosure is not intended to be limited to the aspects shown herein but is to be accorded the widest scope consistent with the principles and novel features disclosed herein.

The foregoing description has been presented for purposes of illustration and description. Furthermore, this description is not intended to limit the embodiments of the disclosure to the form disclosed herein. While a number of example aspects and embodiments have been discussed above, a person skilled in the art will recognize certain variations, modifications, variations, additions and sub-combinations thereof.

## Claims

1. An instruction generating method for a neural network processor, comprising:
determining parameter information about input feature data to be processed by a function operator in a neural network model;
determining hardware parameters supported by the neural network processor;
determining target splicing information corresponding to the parameter information about the input feature data based on the hardware parameters and the parameter information about the input feature data, wherein the target splicing information comprises the number of spliced channels and the number of spliced data sets; and
generating instructions executable by the neural network processor based on the target splicing information.

2. The method according to claim 1, wherein the determining target splicing information corresponding to the parameter information about the input feature data based on the hardware parameters and the parameter information about the input feature data comprises:
determining a number of channels supported by the neural network processor for parallel processing based on the hardware parameters; and
when the number of channels for parallel processing and the number of channels in the parameter information about the input feature data comply with a pre-set size relationship, determining the target splicing information based on the hardware parameters and the parameter information about the input feature data.

3. The method according to claim 2, wherein when the number of channels for parallel processing and the number of channels in the parameter information about the input feature data comply with a pre-set size relationship, determining the target splicing information based on the hardware parameters and the parameter information about the input feature data comprises:
when the number of channels for parallel processing is greater than the number of channels in the parameter information about the input feature data, determining at least one type of splicing information supported by the neural network processor based on the hardware parameters; and
determining, based on the parameter information about the input feature data, the target splicing information in the at least one type of splicing information corresponding to the parameter information about the input feature data

4. The method according to claim 3, wherein the determining, based on the parameter information about the input feature data, the target splicing information in the at least one type of splicing information corresponding to the parameter information about the input feature data comprises:
determining the number of spliced channels and the number of spliced data sets in the target splicing information based on the size relationship between the number of channels in the parameter information about the input feature data and the number of spliced channels in the respective splicing information.

5. The method according to claim 4, wherein after the determining the target splicing information, further comprising:
determining the number of channels to be filled in the target splicing information based on the size relationship between the number of channels in the parameter information about the input feature data and the number of spliced channels in the target splicing information.

6. The method according to claim 5, wherein the generating instructions executable by the neural network processor based on the target splicing information comprises:
generating the instructions executable by the neural network processor based on the number of spliced channels, the number of spliced data sets and the number of channels to be filled.

7. The method according to claim 5, wherein the determining the number of channels to be filled in the target splicing information based on the size relationship between the number of channels in the parameter information about the input feature data and the number of spliced channels in the target splicing information comprises:
when the number of spliced channels in the target splicing information is greater than the number of channels in the parameter information about the input feature data, determining a difference between the number of spliced channels in the target splicing information and the number of channels in the parameter information about the input feature data as the number of channels to be filled in the target splicing information.

8. The method according to any one of claims 1-4, wherein the generating instructions executable by the neural network processor based on the target splicing information comprises:
generating the instructions executable by the neural network processor based on the number of spliced channels and the number of spliced data sets.

9. A method for processing feature data by a neural network processor, comprising:
determining a sequence of executable instructions for processing of at least two sets of input feature data; and
processing the at least two sets of input feature data based on the sequence of the executable instructions to obtain output feature data corresponding to the input feature data.

10. The method according to claim 9, wherein the processing the at least two sets of input feature data based on the sequence of the executable instructions to obtain output feature data corresponding to the input feature data comprises:
splicing the at least two sets of input feature data based on a first splicing instruction in the sequence of the executable instructions; and
processing the spliced at least two sets of input feature data based on a first calculation instruction in the sequence of the executable instructions to obtain output feature data corresponding to the input feature data.

11. The method according to claim 9, wherein the processing the at least two sets of input feature data based on the sequence of the executable instructions to obtain output feature data of the input feature data comprises:
filling the at least two sets of input feature data based on a filling instruction in the sequence of the executable instructions;
splicing the filled at least two sets of input feature data based on a second splicing instruction in the sequence of the executable instructions; and
processing the spliced at least two sets of input feature data based on a second calculation instruction in the sequence of the executable instructions to obtain output feature data corresponding to the input feature data.

12. The method according to claim 11, wherein the filling the at least two sets of input feature data based on a filling instruction in the sequence of the executable instructions comprises:
when the number of channels of each input feature data in the at least two sets of input feature data is less than the number of channels supported by the neural network processor for parallel processing, and the number of channels in the parameter information about the input feature data is less than the number of spliced channels in the target splicing information, the channels of the at least two sets of input feature data are filled based on the filling instruction, so that the number of channels of each set of input feature data in the filled at least two sets of input feature data is the same as the number of spliced channels in the target splicing information.

13. An instruction generating apparatus for a neural network processor, comprising:
a first determining module configured to determine parameter information about input feature data to be processed by a function operator in a neural network model;
a second determining module configured to determine hardware parameters supported by the neural network processor;
a third determining module configured to determine target splicing information corresponding to the parameter information about the input feature data based on the hardware parameters and the parameter information about the input feature data, wherein the target splicing information comprises the number of spliced channels and the number of spliced data sets; and
an instruction generating module configured to generate instructions executable by the neural network processor based on the target splicing information.

14. A computer-readable storage medium storing a computer program for executing the instruction generating method for a neural network processor according to any one of claims 1 to 8 or the method for processing feature data by a neural network processor according to any one of claims 9 to 12.

15. An electronic device, comprising:
a processor;
a memory for storing processor-executable instructions; and
wherein the processor is configured to read the executable instructions from the memory and executing the instructions to implement the instruction generating method for a neural network processor according to any one of claims 1 to 8 or the method for processing feature data by a neural network processor according to any one of claims 9 to 12.
